# EUROPÄISCHE PATENTSCHRIFT

(11) **EP 0 919 971 B1**
(45) Veröffentlichungstag und Bekanntmachung des Hinweises auf die Patenterteilung: **22.01.2003**
(21) Anmeldenummer: 98118521.8
(22) Anmeldetag: 30.09.1998
(51) Int. Cl.: G08B 13/24

(54) **Diebstahl-Sicherungssystem sowie Verfahren zur automatischen Detektion und Identifikation eines Warensicherungsetiketts durch eine Basisstation**
Anti-theft system and method for automatic detection and identification of a security tag on an article
Système et procédé antivol pour détecter et identifier automatiquement une étiquette de surveillance d'articles

(30) Priorität: 17.10.1997 DE 19745953
(43) Veröffentlichungstag der Anmeldung: 02.06.1999
(73) Patentinhaber: Stobbe, Anatoli, 30890 Barsinghausen (DE)
(72) Erfinder: Stobbe, Anatoli, 30890 Barsinghausen (DE)
(74) Vertreter: Schröter & Haverkamp

(56) Entgegenhaltungen:
- EP-A- 0 020 062
- EP-A- 0 262 994
- EP-A- 0 449 173
- EP-A- 0 798 681
- US-A- 4 686 513
- US-A- 5 264 829
- US-A- 5 640 002

## Beschreibung

Die Erfindung bezieht sich auf das Gebiet von Diebstahlsicherungssystemen für Waren. Insbesondere betrifft die Erfindung ein Diebstahl-Sicherungssystem zur Sicherung von Waren umfassend eine Basisstation, die ein elektromagnetisches, über eine Antenne abgestrahltes Feld erzeugt, und ein oder mehrere mit der Basisstation zusammenwirkende, jeweils ein Antwortsignal erzeugende Warensicherungsetiketten, wobei an jeder Ware ein solches Sicherungsetikett angebracht ist und wobei vor einem Verlassen des warengesicherten Ortes die Waren durch das elektromagnetische Feld des Basisstation geführt werden müssen, bei welchem Durchführen eines Sicherungsetikettes das von der Basisstation erfaßbare Antwortsignal erzeugt wird.

Ferner betrifft die Erfindung ein Verfahren zur automatischen Detektion und Identifikation eines Warensicherungsetiketts durch eine Basisstation.

Derartige Diebstahl-Sicherungssysteme werden beispielsweise in Kaufhäusern eingesetzt, um insbesondere höherpreisige Waren gegenüber Diebstählen besser schützen zu können. Zu diesem Zweck befindet sich am Ausgang eines solchen Kaufhauses eine Basisstation, durch die den Bereich des Ausganges abdeckend ein elektromagnetisches Feld erzeugt wird. An den zu schützenden Waren sind Warensicherungsetiketten angebracht. Beim rechtmäßigen Bezahlen einer solchen Ware wird üblicherweise an der Kasse das Sicherungsetikett entweder abgenommen oder zerstört. Durchschreitet eine Person mit der bezahlten Ware das am Ausgang des Kaufhauses befindliche elektromagnetische Feld, reagiert die Basisstation nicht. Möchte dagegen eine Person mit einer Ware mit einem noch vorhandenen bzw. noch funktionsfähigen Sicherungsetikett das elektromagnetische Feld der Basisstation durchschreiten, dann wird ein solches Sicherungsetikett von der Basisstation detektiert, woraufhin ein Alarm ausgelöst wird.

Bekannt sind Sicherungsetiketten, die ein für die Basisstation detektierbares Antwortsignal elektromagnetischer Art beispielsweise durch Energieabsorption erzeugen. Ein solches Diebstahl-Sicherungssystem ist beispielsweise in der EP 0 663 657 A1 beschrieben. Ein energieabsorptiv arbeitendes System verwendet im Sicherungsetikett einen aus Spule und Kondensator gebildeten Schwingkreis. Durch diesen Schwingkreis wird beim Eintreten in das elektromagnetische Feld der Basisstation ein zweites magnetisches Wechselfeld generiert, welches über eine Antenne von der Basisstation erfaßt werden kann. Derartige Systeme arbeiten üblicherweise im HF-Bereich bei 1 bis 2 MHz.

Es sind weitere Systeme bekannt, bei denen als Sicherungsetikett ein ferromagnetisches Material verwendet wird und bei dem die Basisstation nach Art einer Metalldetektionsvorrichtung arbeitet. Auch bei dieser Vorrichtung wird ein elektromagnetisches Wechselfeld von der Basisstation erzeugt, welches durch die von dem ferromagnetischen Körper hervorgerufenen Störungen beeinflußt wird, woraufhin ein solcher Körper detektierbar ist.

Auch wenn mit diesen bekannten Diebstahl-Sicherungssystemen einer Vielzahl von Diebstählen vorgebeugt werden kann, so kann ein solches System auch dadurch überlistet werden, daß das Sicherungsetikett vor einem Durchschreiten des von der Basisstation erzeugten elektromagnetischen Feldes gegenüber diesem abgeschirmt wird. Eine solche Abschirmung läßt sich bereits dadurch erreichen, daß ein solches Sicherungsetikett bzw. die gesamte Ware mit dem Sicherungsetikett in Aluminiumfolie oder andere metallische Folien eingewickelt wird. Bei größeren Gegenständen könnte ein solches System etwa dadurch überlistet werden, daß mit derartigen Sicherungsetiketten geschützte Waren in einem Aluminiumkoffer transportiert durch das elektromagnetische Feld der Basisstation gebracht werden. Da das von der Basisstation erzeugte elektromagnetische Feld nicht beeinflußt wird und somit die Basisstation kein Antwortsignal erhält, wird dementsprechend auch kein Alarm ausgelöst.

Problematisch ist bei diesen bekannten Systemen auch eine Situation, in der mehrere solcher Sicherungsetiketten in das Detektierfeld der Basisstation nacheinander eintreten. Das erste Sicherungsetikett blockiert dann die in Alarmstellung befindliche Basisstation. Nachfolgende in den Detektionsbereich der Basisstation eintretende Sicherungsetiketten können dann unbemerkt die Basisstation passieren. Ein im Bereich einer solchen Basisstation verstecktes Sicherungsetikett kann auf diese Weise die gesamte Anlage dauerhaft außer Betrieb setzen.

Ausgehend von diesem diskutierten Stand der Technik liegt der Erfindung daher die Aufgabe zugrunde, ein Diebstahl-Sicherungssystem vorzuschlagen, welches gegenüber Manipulationen weniger empfindlich ist.

Der Erfindung liegt ferner die Aufgabe zugrunde, ein hinsichtlich einer Manipulationsmöglichkeit verbesserten Verfahrens zur automatischen Detektion und Identifikation eines oder mehrerer Warensicherungsetiketten durch eine Basisstation bereitzustellen.

Die systembezogene Aufgabe wird erfindungsgemäß dadurch gelöst, daß die Basisstation eine niederfrequent arbeitende NF-Stufe mit einer NF-Sende-Empfangseinheit aufweist und daß die mit der Basisstation zusammenwirkenden Sicherungsetiketten jeweils einen aktiven Transponder mit einer auf gleicher Frequenz arbeitenden NF-Stufe mit einer NF-Sende-Empfangseinheit umfassen, so daß eine bidirektionale Signalübermittlung zwischen der Basisstation und einem Transponder durchführbar ist.

Die verfahrensbezogene Aufgabe wird erfindungsgemäß gelöst durch ein Verfahren zur automatischen Detektion und Identifikation eines Warensicherungsetikettes durch eine Basisstation unter Verwendung von zwei NF-Stufen, wobei eine NF-Stufe mit einer NF-Sende-Empfangseinheit der Basisstation und eine weitere NF-Stufe mit einer NF-Sende-Empfangseinheit einem aktiven Transponder zugeordnet ist, mit folgenden Schritten:
- Senden eines niederfrequenten Kontrollsignales durch die NF-Stufe der Basisstation,
- Empfangen des Kontrollsignales durch die NF-Stufe des Transponders,
- Senden eines Antwortsignales durch einen dem Transponder zugeordneten Sender,
- Empfangen des Antwortsignales durch eine auf gleicher Frequenz arbeitende Empfangseinheit der Basisstation,
- Senden eines Empfangsbestätigungssignales durch die Basisstation und
- Empfangen des Empfangsbestätigungssignales durch den Transponder,
- wobei bei Empfang eines Nichtfreigabesignales durch den Transponder oder bei Nichtempfang eines Empfangsbestätigungssignales nach wiederholtem Senden des Antwortsignales der Transponder auf der NF-Strecke einen Alarm auslöst und
- wobei vor und/oder während der Signalübermittlung durch die Basisstation eine Belegungsüberprüfung hinsichtlich einer Fremdbelegung der zum Empfang des Antwortsignals verwendeten Strecke erfolgt und bei der Feststellung einer Fremdbelegung eine Belegungsmeldung ausgegeben wird.

Da sowohl der Basisstation als auch dem Sicherungsetikett eine im Niederfrequenzbereich arbeitende NF-Stufe mit jeweils einer NF-Sende-Empfangseinheit zugeordnet ist, wobei eine Datenübermittlung im Frequenzbereich zwischen 5 bis 100 KHz zweckmäßig ist, ist ein System gescharfen, dessen Signalübermittlung aufgrund der gewählten Frequenz nicht ohne weiteres abschirmbar ist. Dabei ist vorgesehen, daß das von der NF-Stufe der Basisstation erzeugte elektromagnetische Feld vorzugsweise ein zyklisches ist, bei dem ein Kontrollsignal gesendet wird. Da auch das Sicherungsetikett eine NF-Stufe mit einer NF-Sende-Empfangseinheit aufweist, ist ein als Transponder ausgebildetes aktives Sicherungsetikett geschaffen, so daß zwischen der Basisstation und einem solchen als Transponder ausgebildeten Sicherungsetikett eine bidirektionale Signalübermittlung (Datenübermittlung) möglich ist. Bei einer solchen bidirektionalen Signalübermittlung können mehrere Berechtigungsüberprüfungen oder Gültigkeitsprüfungen durchgeführt werden, so daß eine Alarmauslösung an unterschiedliche Überprüfungsschritte koppelbar ist. Überdies wird dadurch die Auslösung von Fehlalarmen erheblich verringert.

Als ein solcher Überprüfungsmechanismus ist vorgesehen, daß durch die Basisstation überprüft wird, ob der zum Empfang des Antwortsignales gewählte Frequenzbereich belegt oder frei ist. Erfolgt die Kanalbelegung durch einen Störsender wird als Belegungsmeldung ein entsprechender Systemalarm ausgelöst.

Zum Zweck der weiteren Überprüfung sendet die NF-Stufe der Basisstation nach Empfang eines von dem Transponder gesendeten Antwortsignales ein Empfangsbestätigungssignal. Dieses Empfangsbestätigungssignal kann entweder als Freigabesignal codiert sein, welches den erfolgreichen Abschluß der bidirektionalen Datenübermittlung quittiert. Systemseitig ist ein solcher Transponder (mit der daran befindlichen Ware) dann berechtigt, den gesicherten Warenort zu verlassen. Als Empfangsbestätigungssignal kann auch ein Nichtfreigabesignal gesendet werden, welches Nichtfreigabesignal entweder im Rahmen einer Antikollisionsüberwachung durch die Basisstation eine Belegung der die Antwortsignale empfangenden Einheit der Basisstation darstellt oder den Transponder zu einem erneuten Aussenden des Antwortsignales veranlaßt oder ein anderer Steuerbefehl sein kann.

Besonders vorteilhaft ist, das von der Basisstation mittels der NF-Stufe gesendete Kontrollsignal als Wecksignal auszubilden, nach dessen Empfang durch den NF-Empfänger des Transponders, der zum Aussenden des Antwortsignales vorgesehene Sender des Transponders geweckt wird. Diese Maßnahme ermöglicht eine lange Batterielebensdauer, da der Transponder im Schlafbetrieb nur sehr wenig Strom verbraucht. Der zum Senden des Antwortsignales des Transponders vorgesehene Sender kann beispielsweise der NF-Sender der NF-Stufe sein. Die Vorteile bei Verwendung eines NF-Senders zum Senden des Antwortsignales liegen insbesondere darin, daß diese Sendesignale nur schwer abschirmbar ist, so daß ein Antwortsignalempfang durch die Basisstation auch bei einem mit Aluminiumfolie oder anderen metallischen Folien umwickelten Transponder möglich ist.

Durch die bidirektionale Signal- bzw. Datenübermittlung kann ein solches System nicht nur als Diebstahl-Sicherungssystem eingesetzt werden, sondern dem von dem Transponder gesendeten Antwortsignal kann zusätzliche Informationen etwa hinsichtlich der Warenidentität beinhalten, so daß diese von der Basisstation empfangenen Antwortsignale einer entsprechenden Warenverwaltung zugeführt werden können.

Da eine Transponderdetektion und Identifikation vor allem beim Antikollisionsbetrieb mit mehreren Transpondern in sehr kurzer Zeit stattfinden soll und die Datenübermittlungsrate auf der NF-Strecke daher begrenzt ist, ist in einer vorteilhaften Weiterbildung des erfindungsgemäßen Diebstahl-Sicherungssystem vorgesehen, daß dem im Sicherungsetikett enthaltenen Transponder eine HF-Stufe umfassend einen HF-Sender und der Basisstation eine auf gleicher Frequenz arbeitende HF-Stufe mit einem HF-Empfänger zugeordnet sind. Auf einer HF-Strecke, beispielsweise 400 MHz ist die Datenübermittlungsrate bei gleicher Zeiteinheit um ein Vielfaches höher. Es ist zweckmäßig, die HF-Stufe an die NF-Stufe des Transponders derart zu koppeln, daß die HF-Stufe beim Empfang des Kontroll- oder Wecksignales geweckt wird. Bei dieser Ausgestaltung ist vorgesehen, daß lediglich das Transponderantwortsignal auf der HF-Strecke transportiert wird. Das von der Basisstation daraufhin gesendete Empfangsbestätigungssignal wird dagegen auf der NF-Strecke gesendet, insbesondere um manipulierende Abschirmungen zu überwinden. Da die Basisstation zweckmäßigerweise nicht batteriebetrieben sondern stromnetzbetrieben arbeitet, ist die Sendeleistung der NF-Stufe der Basisstation um ein Vielfaches höher als die Sendeleistung der NF-Stufe des Transponders. Daher vermag ein auf der NF-Strecke gesendetes Empfangsbestätigungssignal auch mögliche Abschirmungen zu durchdringen. Ist ein solches Sicherungsetikett bezüglich der HF-Strecke abgeschirmt, sendet die NF-Stufe der Basisstation, da von dem HF-Empfänger kein Antwortsignal des Transponders empfangen worden ist, auch kein Empfangsbestätigungssignal aus. Wird von der NF-Stufe des Transponders trotz wiederholtem Antwortsignalaussendens kein Empfangsbestätigungssignal empfangen, wird die NF-Sendeeinheit der NF-Stufe des Transponders dazu verwendet, um ein Alarmsignal auf der NF-Strecke auszusenden. Dieses Alarmsignal wird von der Basisstation empfangen, woraufhin ein Alarm ausgelöst wird. Als Alarm kann von der Basisstation ein akustischer und/oder optischer Alarm, etwa eine Sirene, betätigt werden. Als Alarm kann jedoch auch das Aussenden eines Alarmsignales auf der NF-Strecke anstelle der anderen oder zusätzlich zu den anderen Alarmmechanismen gesendet werden, welches Alarmsignal einen Steuerbefehl beinhaltet, welches den Transponder in einen Alarmbetrieb versetzt. Der beim Transponder ausgelöste Alarm kann auch optischer oder akustischer Natur sein, so daß der in Alarmbetrieb versetzte Transponder vom Sicherungspersonal detektierbar ist.

In einer Weiterbildung ist die HF-Stufe des Transponders an eine Antennenverstimmeinrichtung angeschlossen, mit Hilfe der bei Detektion einer Antennenverstimmung, etwa durch eine Abschirmung eine Antennenverstimmung herbeigeführt wird. Dabei ist vorgesehen, die im Normalfall auf Luft abgestimmte Antenne auf Metall zu verstimmen.

Soll zwischen der Basisstation und einem Transponder nach Ausenden bzw. Empfangen eines Antwortsignales ein bidirektionaler Dialog durchgeführt werden, kann vorgesehen sein, sowohl den Transponder als auch die Basisstation mit jeweils einer HF-Stufe umfassend eine HF-Sende-Empfangseinheit auszustatten. Bei einer solchen Ausgestaltung der Erfindung können sehr viel größere Datenmengen in sehr kurzer Zeit zwischen der Basisstation und dem Transponder ausgetauscht werden, so daß dadurch die Sicherheit gegenüber Manipulationen auf der Luftstrecke deutliche erhöht ist.

Zur weiteren Erhöhung der Sicherheit kann der Basisstation ein Alarmsignalempfänger zugeordnet sein, dessen Empfangsbereich im wesentlichen außerhalb des Wirkbereiches der Basisstation angeordnet ist. Sollte diejenige Strecke, auf der ein Antwortsignal von der Basisstation empfangen werden soll, belegt sein, und der Transponder über die NF-Strecke ein entsprechendes Störsignal erhalten haben, welches den Transponder in eine Alarmstellung schaltet und der Transponder daraufhin ein Alarmsignal aussendet, kann dieses von dem nicht gestörten Alarmsignalempfänger empfangen werden. Nach Empfang dieses Signales wird durch den Alarmsignalempfänger dann ein Systemalarm entsprechend einem von der Basisstation ausgelösten Systemalarm ausgelöst.

Bei einem Einsatz von einer Vielzahl von Transpondern ist vorgesehen, daß das von jedem Transponder gesendete Alarmsignal einen identischen Datenaufbau aufweist und somit datengleich ist. Ferner wird das auf der NF-Strecke von der Basisstation gesendete Weck- oder Kontrollsignal als Synchronistationssignal verwendet, um das Aussenden von Alarmsignalen mehrerer Transponder zeitlich zu synchronisieren. In einer solchen Ausgestaltung ist ein sicheres Erkennen eines empfangenen Alarmsignales durch die Basisstation auch dann gewährleistet, wenn mehrere Transponder sich in einem Alarmbetrieb befinden.

Besonders vorteilhaft ist es, das Diebstahl-Sicherungssystem zusätzlich mit einem Antikollisionsverfahren zu betreiben, so daß eine Vielzahl von Transpondern geregelt von der Basisstation detektiert und identifiziert werden und mit dieser kommunizieren können. Mit einem solchen Antikollisionsverfahren ist es zum Beispiel möglich, daß eine Person mit einem eine Person kennzeichnenden Personaltransponder ausgestattet ist und zusammen mit verschiedenen mit entsprechenden Sicherungsetiketten bestückten Gegenständen in den Wirkbereich der Basisstation eintritt und alle Transponder während der Aufenthaltsdauer detektiert und identifiziert werden können. Durch die Basisstation kann dann eine Personenzuordnung und Berechtigungsüberprüfung sowie eine entsprechende Zuordnung und Berechtigungsüberprüfung des mitgeführten Gegenstandes durchgeführt werden.

Weitere Vorteile und Weiterbildungen der Erfindung sind Bestandteil der übrigen Unteransprüche sowie der nachfolgenden Beschreibung von Ausführungsbeispielen. Es zeigen:
- **Fig. 1:**: ein schematisiertes Blockschaltbild eines Diebstahl-Sicherungssystems zur Sicherung von Waren,
- **Fig. 1a:**: die Anordnung des Diebstahl-Sicherungssystems der Figur 1 in einer schematisierten Draufsicht,
- **Fig. 2:**: ein schematisiertes Flußdiagramm zum Detektieren und Identifizieren eines Warensicherungsetikettes durch eine Basisstation mit dem in Figur 1 gezeigten Diebstahl-Sicherungssystem,
- **Fig. 3:**: ein schematisiertes Blockschaltbild eines weiteren Diebstahl-Sicherungssystems zur Sicherung von Waren,
- **Fig. 4:**: ein schematisiertes Flußdiagramm zum Detektieren und Identifizieren eines Warensicherungsetikettes durch eine Basisstation gemäß dem Ausführungsbeispiel der Figur 3 und
- **Fig. 5:**: ein schematisiertes Flußdiagramm zum Detektieren und Identifizieren eines Warensicherungsetikettes durch eine Basisstation gemäß noch einem weiteren Ausführungsbeispiel.

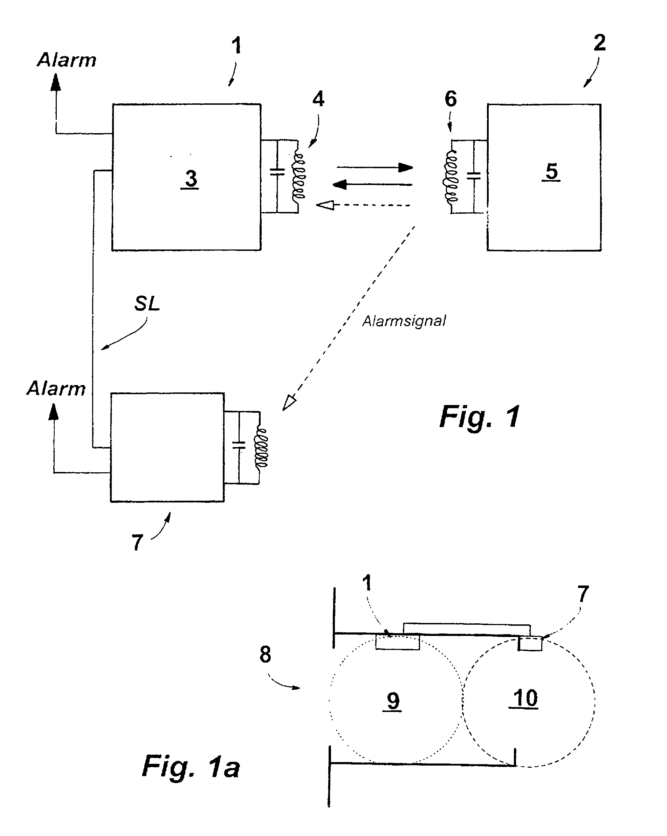

Ein Diebstahl-Sicherungssystem zur Sicherung von Waren umfaßt eine Basisstation 1 sowie eine Vielzahl von Transpondern, von denen in Figur 1 ein Transponder 2 dargestellt ist. Der Transponder 2 ist in einem Warensicherungsetikett enthalten, welches an einer zu sichernden Ware angebracht ist. Die Basisstation 1 ist im Bereich eines Ausganges eines warengesicherten Ortes, etwa eines Kaufhauses dergestalt installiert, daß die diesen Ort verlassenden Waren, an denen ein solches Sicherungsetikett angebracht ist, durch den Wirkungsbereich der Basisstation 1 hindurchgeführt werden müssen.

Die Basisstation 1 besitzt eine NF-Stufe 3, die aus einer Sendeeinheit sowie einer Empfangseinheit besteht. Der NF-Stufe 3 ist eine Antenne 4 zugeordnet, mittels der auf der NF-Strecke zu sendende Signale gesendet und mit der auf der NF-Strecke zu empfangende Daten empfangen werden können. Der Transponder 2 umfaßt ebenfalls eine NF-Stufe 5, die aus einer Sendeeinheit sowie einer Empfangseinheit besteht, welche Sende-Empfangseinheit gemeinsam die NF-Antenne 6 verwendet.

Beide Module - Basisstation 1 und Transponder 2 - umfassen ferner jeweils eine Prozessoreinheit, welche Prozessoreinheiten zusätzliche Aktoren, etwa ein Alarmsystem beaufschlagen kann.

In einer Prinzipskizze ist in Figur 1a die Anordnung eines Diebstahl-Sicherungssystems bestehend aus der Basisstation 1 und einem zusätzlichen Alarmsignalempfänger 7 dargestellt. Das Diebstahl-Sicherungssystem ist im Bereich des Ausgang 8 eines nicht näher dargestellten Kaufhauses angeordnet. Der Wirkbereich 9 der Basisstation 1 ist kurz-gestrichelt umrandet und stellt denjenigen Bereich dar, in dem ein Transponder 2 ein von der Basisstation 1 gesendetes Wecksignal zu empfangen vermag. Außerhalb des Wirkbereiches 9 ist der Alarmempfänger 7 angeordnet, dessen Empfangsbereich 10 lang-strichpunktiert dargestellt ist. Der Alarmsignalempfänger 7 befindet sich beispielsweise am Ausgang eines Windfanges, den diesen Ausgang 8 benutzende Personen durchschreiten müssen.

Die Basisstation 1 und der Alarmsignalempfänger 7 sind durch eine Synchronisationsleitung SL miteinander verbunden. Durch diese Synchronisationsleitung SL erfolgt eine Synchronisation zwischen dem Sendebetrieb der Basisstation 1 und dem Empfangsbetrieb des Alarmsignalempfängers 7. Die Synchronisation ist so ausgelegt, daß die zyklisch das Wecksignal sendende NF-Stufe 3 der Basisstation 1 die Empfangsbereitschaft des Alarmsignalempfängers 7 antizyklisch steuert. Der Alarmsignalempfänger 7 kann sodann ein auf der NF-Strecke gesendetes Alarmsignal empfangen, wenn die NF-Stufe 3 kein Wecksignal sendet. Somit ist eine gegenseitige Beeinflussung zwischen der Basisstation 1 und dem Alarmsignalempfänger 7 vermieden. Zusätzlich ist vorgesehen, daß für die Dauer des Sendens des Kontroll- bzw. Wecksignales der Basisstation 1 der Alarmsignalempfänger 7 über Dämpfungsglieder stummgeschaltet wird, damit eine Beeinflussung des Alarmsignalempfängers 7 durch das Senden des Wecksignales der NF-Stufe 3 vermieden ist.

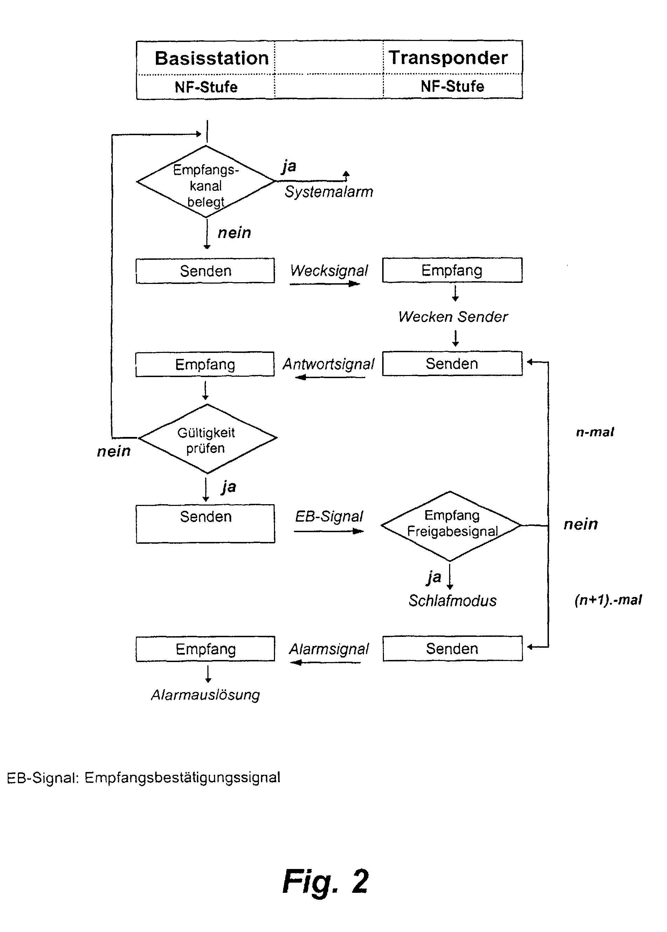

Der Betrieb dieses Diebstahl-Sicherungssystems ist in Figur 2 dargestellt. In einem ersten Schritt wird von der Basisstation 1 überprüft, ob der Empfangskanal auf der NF-Strecke belegt ist. Ist dieser durch einen Störsender manipuliert und somit belegt, wird von der Basisstation 1 ein Systemalarm ausgelöst. Arbeitet die Basisstation 1 mit einem Antikollisionsalgorithmus, wird von der NF-Stufe 3 bei Belegung des Empfangskanales durch Kommunikation mit einem anderen Transponder 2 ein Wartesignal gesendet. Ist der Empfangskanal frei, sendet die NF-Stufe 3 auf der NF-Strecke ein Wecksignal aus, welches bei Verwendung eines Antikollisionsverfahrens codiert ist. Dieses Wecksignal wird von einem in den Wirkungsbereich der Basisstation 1 befindlichen Transponders 2 mit seiner NF-Stufe 5 empfangen. Das empfangene Wecksignal führt zu einem Wecken des NF-Senders 5, so daß dieser nur dann in Betrieb ist, wenn sich der Transponder 2 tatsächlich im Wirkungsbereich der Basisstation 1 befindet und somit von dem NF-Sender 3 gesendete Antwortsignale auch von der Basisstation 1 empfangbar sind. Das von der Basisstation 1 empfangene NF-Antwortsignal enthält einen Identifizierungscode. In der der Basisstation 1 zugeordneten Prozessoreinheit wird dieser Code empfangen und auf seine Gültigkeit hin überprüft. Konnten die empfangenen Transponderdaten eindeutig decodiert und damit der Transponder identifiziert werden, erfolgt die Aussendung eines Empfangsbestätigungssignales von der Basisstation 1 an den Transponder 2. Das Empfangsbestätigungssignal stellt gleichsam ein Quittungssignal dar, mit welchem der Transponder 2 die Nachricht erhält, daß sein Antwortsignal empfangen, ordnungsgemäß decodiert und eine Transponderidentifikation stattgefunden hat. Konnten die Transponderdaten (Antwortsignal) nicht decodiert werden, wiederholt die Basisstation 1 den Weckruf solange, bis gültige Daten von dem Transponder 2 empfangen werden. Erst dann sendet die Basisstation 1 das entsprechende Empfangsbestätigungssignal. Hat der Transponder 2 das Empfangsbestätigungssignal erhalten, schaltet er ab (= Schlafmodus), bis er erneut in den Detektionsbereich der Basisstation 1 oder einer weiteren Basisstation eintritt und somit erneut geweckt wird.

Da die Kommunikation zwischen der Basisstation und dem Transponder 2 mitunter zeitweilig gestört sein kann, wiederholt der Transponder 2 nach Empfang des Wecksignales entsprechend einer vorbestimmten Anzahl (n-mal) sein Antwortsignal. Dabei ist vorgesehen, daß die Anzahl der Antwortsignalwiederholungen einstellbar ist. Wenn nach Ablauf der Anwortsignalwiederholungen von dem Transponder 2 kein Empfangsbestätigungssignal empfangen worden ist, sendet der Transponder beim (n+1).mal zum letzten Mal ein Antwortsignal aus. Erhält er auch auf dieses Antwortsignal hin kein Empfangsbestätigungssignal von der Basisstation 1, schaltet der Transponder 2 auf einen Störbetrieb um. In diesem Fall sendet der Transponder ein spezielles Alarmsignal. Dieses Alarmsignal kann beispielsweise als Dauersignal ausgebildet sein. Anstelle oder zusammen mit dem Aussenden eines Alarmsignales kann der Transponder 2 selbst auch einen Alarm optischer oder akustischer Art generieren.

Das von dem Transponder 2 gesendete Alarmsignal kann für den Fall, daß der NF-Empfänger 3 bzw. der Alarmsignalempfänger der Basisstation 1 durch einen Störsender manipulativ blockiert ist, nicht empfangen werden. Für diesen Zweck bietet es sich an, außerhalb des Wirkungsbereiches der Basisstation 1 einen weiterem Alarmsignalempfänger 7 zu positionieren, von dem dann das Alarmsignal des Transponders 2 empfangen wird und der daraufhin einen Systemalarm auslöst.

Da die gewählte NF-Frequenz nicht ohne weiteres abschirmbar ist, ist ein solches System gegenüber Manipulationen weitgehend gesichert. Diese Sicherung wird dadurch erhöht, daß bei der bidirektionalen Kommunikation zwischen der Basisstation 1 und dem Transponder 2 Überprüfungsmechanismen vorgesehen sind, und daß bei Nichteinhalten bestimmter Kriterien ein Alarm ausgelöst wird.

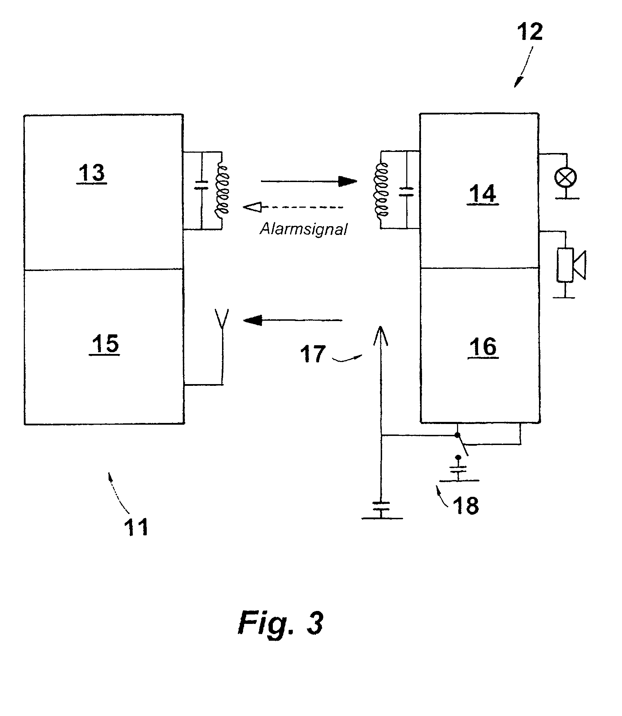

In Figur 3 ist eine weitere Basisstation 11 und ein weiterer Transponder 12 dargestellt, die neben jeweils einer NF-Stufe 13, 14, umfassend jeweils eine NF-Sende-Empfangseinheit auch über eine HF-Stufe 15, 16 verfügen. Dabei ist vorgesehen, daß die HF-Stufe 16 des Transponders 12 als Sender und die HF-Stufe 15 der Basisstation 11 als Empfänger ausgebildet ist. Die der HF-Stufe 16 zugeordnete Antenne 17 ist an eine Verstimmschaltung 18 angeschlossen, mit der die Antenne 17 bezüglich ihres Abgleiches verstimmt werden kann. Das in Figur 3 dargestellte Diebstahl-Sicherungssystem ist insbesondere dann zweckmäßig einsetzbar, wenn die im Antwortsignal übermittelten Daten so umfangreich sind, daß eine Datenübertragung auf der NF-Strecke zuviel Zeit in Anspruch nehmen würde. Insbesondere bei einer Verwendung eines Antikollisionsverfahrens bietet sich das Vorsehen jeweils einer HF-Stufe 15, 16 somit an.

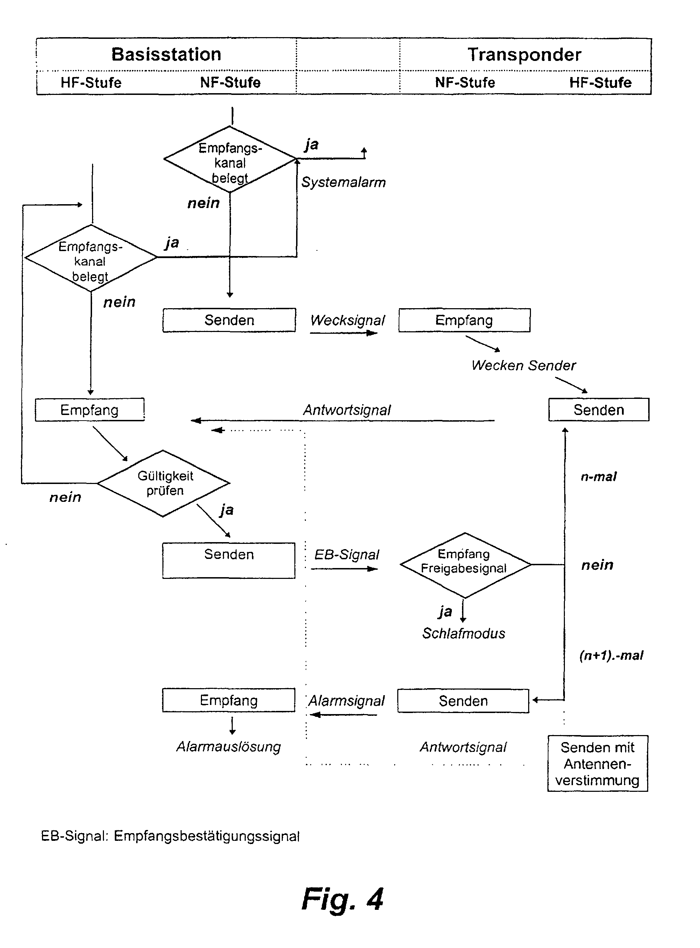

In Ergänzung zu dem in Figur 2 gezeigten Betriebsablauf erfolgt bei diesem Diebstahl-Sicherungssystem, wie in Figur 4 gezeigt, zusätzlich zur Überprüfung der Belegung des NF-Empfangskanals auch eine Belegungsüberprüfung des HF-Empfangskanals der HF-Stufe 15 der Basisstation 11. Für den Fall, daß nach dem Wecken über die NF-Stufe 14 des Transponders 12 mehrfach, d.h. (n+1)-mal erfolglos und somit ohne Erhalt eines Empfangsbestätigungssignales das Antwortsignal auf der HF-Strecke gesendet worden ist, erfolgt auch bei diesem Transponder 12 eine Umschaltung in einen Stör- oder Alarmbetrieb. Dieser Stör- oder Alarmbetrieb kann entsprechend dem in Figur 1 dargestellten Ausführungsbeispiel ausgebildet sein.

Wird von der Basisstation 11 das von der HF-Stufe 16 gesendete Antwortsignal nicht empfangen, so kann dieses daran liegen, daß das Sicherungsetikett, d.h. der Transponder 12 durch Abschirmung manipuliert worden ist. Es erfolgt dann eine Verstimmung der Antenne 17 anhand der Verstimmschaltung 18, wodurch der Einfluß auf die HF-Antenne 17 durch die äußere Abschirmung weitestgehend ausgeräumt, zumindest jedoch minimiert wird. Zusätzlich kann vorgesehen sein, daß bei einem Störbetrieb des Transponders 12 der HF-Sender 16 zwischen den beiden Betriebsstufen - Antwortsignal ohne Antennenverstimmung bzw. Antwortsignal mit Antennenverstimmung - hin- und hertoggelt, um somit Manipulationsmaßnahmen zu überwinden. Dabei kann der Transponder auch durch Empfang eines entsprechenden Steuersignales auf der NF-Strecke von der Basisstation 11 in den zuvor beschriebenen Toggelbetrieb geschaltet werden.

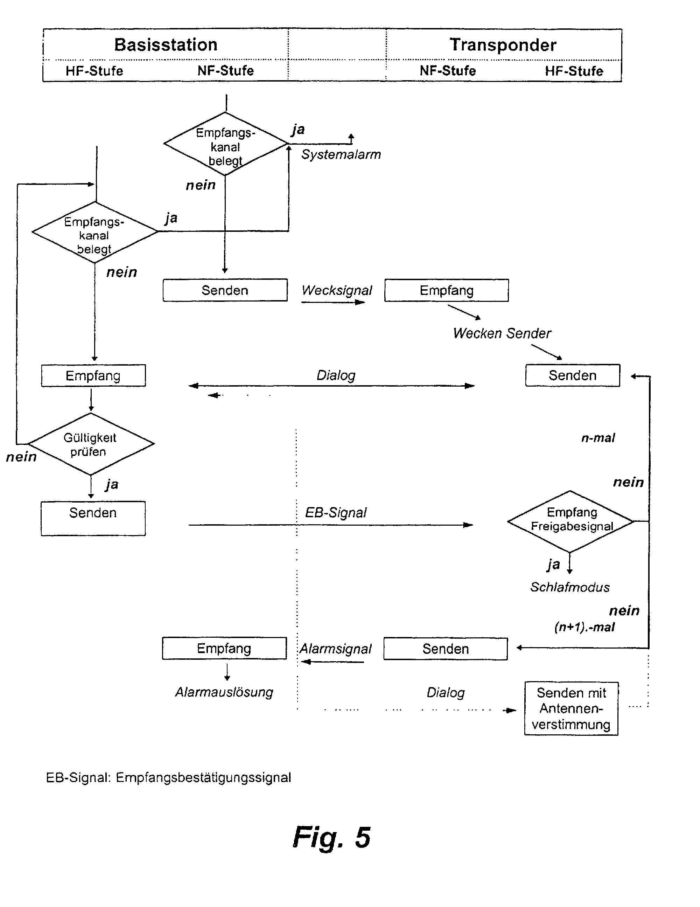

In Figur 5 ist schematisiert der Betrieb eines weiteren Diebstahl-Sicherungssystems gezeigt, bei welchem sowohl die Basisstation als auch der Transponder neben einer vollständigen NF-Stufe eine vollständige HF-Stufe als Sende-Empfangseinheit aufweisen. Beim Betrieb eines solchen Systemes kann dann auf der HF-Strecke ein bidirektionaler Dialog zwischen der Basisstation und dem Transponder stattfinden. Eine solche Ausgestaltung bietet sich insbesondere dann an, wenn zwischen beiden Modulen ein erhöhter Datenaustausch stattfinden soll; z.B. um gegen Abhören der Funkstrecke eine Authentikation durchzuführen bzw. die auszutauschenden Daten mit Paßwörtern zu schützen oder verschlüsselt zu versenden. Mit einem bidirektionalen Datenverkehr auf der HF-Strecke ist es weitaus sicherer, mögliche Manipulationen ausgelöst durch Abschirmung oder durch Fremd- bzw. Störsender zu erkennen. Da zudem eine bidirektionale NF-Strecke vorhanden ist, kann optional auch durch die Basisstation der Alarmmodus im Transponder eingeleitet werden. Dabei ist davon auszugehen, daß die Sendeleistung der Basisstation auf der NF-Strecke wesentlich stärker ist und somit auch NF-bedingte Abschirmversuche durchdringt und somit vom Transponder empfangen werden kann.

Aus der Beschreibung der Erfindung sowie der Ausführungsbeispiele wird deutlich, daß sich ein solches Diebstahl-Sicherungssystem für eine Vielzahl verschiedener Einsatzzwecke eignet. Durch die Möglichkeit der bidirektionalen Datenübertragung kann dem neben einer Identifizierung auch eine Warenklassifizierung erfaßt werden, welche Daten von der Basisstation etwa an eine Warenverwaltung übergebbar sind. Das System eignet sich daher auch zur Kontrolle von Maschinen- oder Werkzeugparks, aus denen berechtigte Mitarbeiter Geräte entnehmen können. Eine unberechtigte Gerätentnahme ist bei Verwendung eines solchen Systems erheblich erschwert.

### Zusammenstellung der Bezugszeichen

- 1: Basisstation
- 2: Transponder
- 3: NF-Stufe der Basisstation
- 4: Antenne der NF-Stufe 3
- 5: NF-Stufe des Transponders
- 6: Antenne der NF-Stufe 5
- 7: Alarmsignalempfänger
- 8: Ausgang
- 9: Wirkbereich
- 10: Empfangsbereich
- 11: Basisstation
- 12: Transponder
- 13: NF-Stufe
- 14: NF-Stufe
- 15: HF-Stufe der Basisstation 11
- 16: HF-Stufe der Transponder 12
- 17: Antenne der HF-Stufe 16
- 18: Verstimmschaltung

- SL: Synchronisationsleitung

## Patentansprüche

1. Diebstahl-Sicherungssystem zur Sicherung von Waren umfassend eine Basisstation, die ein elektromagnetisches, über eine Antenne abgestrahltes Feld erzeugt, und ein oder mehrere mit der Basisstation zusammenwirkende, jeweils ein Antwortsignal erzeugende Warensicherungsetiketten, wobei an jeder Ware ein solches Sicherungsetikett angebracht ist und wobei vor einem Verlassen des warengesicherten Ortes die Waren durch das elektromagnetische Feld des Basisstation geführt werden müssen, bei welchem Durchführen eines Sicherungsetikettes das von der Basisstation erfaßbare Antwortsignal erzeugt wird, **dadurch gekennzeichnet, daß** die Basisstation (1, 11) eine niederfrequent arbeitende NF-Stufe (3, 13) mit einer NF-Sende-Empfangseinheit aufweist und daß die mit der Basisstation (1, 11) zusammenwirkenden Sicherungsetiketten jeweils einen aktiven Transponder (2, 12) mit einer auf gleicher Frequenz arbeitenden NF-Stufe (5, 14) mit einer NF-Sende-Empfangseinheit umfassen, so daß eine bidirektionale Signalübermittlung zwischen der Basisstation (1, 11) und einem Transponder (2, 12) durchführbar ist.

2. Diebstahl-Sicherungssystem nach Anspruch 1, **dadurch gekennzeichnet, daß** die NF-Sende-Empfangseinheit (5, 14) des Transponders (2, 12) eine einzige Antenne (6) aufweist, die sowohl dem Signalempfang als auch dem Senden dient.

3. Diebstahl-Sicherungssystem nach Anspruch 1 oder 2, **dadurch gekennzeichnet, daß** dem Transponder (12) ein von seiner NF-Sende-Empfangseinheit (14) weckbare, hochfrequent arbeitende HF-Stufe (16) umfassend einen HF-Sender und der Basisstation (1, 11) eine auf gleicher Frequenz arbeitende HF-Stufe (15) mit einem HF-Empfänger zugeordnet sind.

4. Diebstahl-Sicherungssystem nach Anspruch 3, **dadurch gekennzeichnet, daß** der HF-Sender (16) des Transponders (12) an eine Antennenverstimmeinrichtung (18) angeschlossen ist.

5. Diebstahl-Sicherungssystem nach Anspruch 3 oder 4, **dadurch gekennzeichnet, daß** sowohl der Basisstation als auch dem Transponder als HF-Stufe eine HF-Sende-Empfangseinheit zugeordnet ist.

6. Diebstahl-Sicherungssystem nach einem der Ansprüche 1 bis 5, **dadurch gekennzeichnet, daß** der NF-Empfänger der NF-Stufe (3, 13) als Alarmempfänger zum Empfang eines von dem Transponder (2, 12) gesendeten Alarmsignales ausgebildet ist.

7. Diebstahl-Sicherungssystem nach einem der Ansprüche 1 bis 6, **dadurch gekennzeichnet, daß** der Basisstation (1, 11) ein weiterer Alarmempfänger (7) zugeordnet ist, dessen Empfangsbereich (10) im wesentlichen außerhalb des Wirkbereiches (9) der Basisstation (1) angeordnet ist.

8. Verfahren zur automatischen Detektion und Identifikation eines Warensicherungsetikettes durch eine Basisstation (1, 11) unter Verwendung von zwei NF-Stufen (3, 13; 5, 14), wobei eine NF-Stufe (3, 13) mit einer NF-Sende-Empfangseinheit der Basisstation (1, 11) und eine weitere NF-Stufe (5, 14) mit einer NF-Sende-Empfangseinheit einem aktiven Transponder (2, 12) zugeordnet ist, mit folgenden Schritten:
- Senden eines niederfrequenten Kontrollsignales durch die NF-Stufe (3, 13) der Basisstation (1, 11),
- Empfangen des Kontrollsignales durch die NF-Stufe (5, 14) des Transponders (2, 12),
- Senden eines Antwortsignales durch einen dem Transponder (2, 12) zugeordneten Sender (5, 16),
- Empfangen des Antwortsignales durch eine auf gleicher Frequenz arbeitende Empfangseinheit (3, 15) der Basisstation (1, 11),
- Senden eines Empfangsbestätigungssignales durch die Basisstation (1, 11) und
- Empfangen des Empfangsbestätigungssignales durch den Transponder (2, 12),
- wobei bei Empfang eines Nichtfreigabesignales durch den Transponder (12) oder bei Nichtempfang eines Empfangsbestätigungssignales nach wiederholtem Senden des Antwortsignales der Transponder (2, 12) auf der NF-Strecke einen Alarm auslöst,
- wobei vor und/oder während der Signalübermittlung durch die Basisstation (1, 11) eine Belegungsüberprüfung hinsichtlich einer Fremdbelegung der zum Empfang des Antwortsignales verwendeten Strecke erfolgt und bei der Feststellung einer Fremdbelegung eine Belegungsmeldung ausgegeben wird.

9. Verfahren nach Anspruch 8, **dadurch gekennzeichnet, daß** das Kontrollsignal ein Wecksignal ist, nach dessen Empfang durch den NF-Empfänger (5, 14) des Transponders (2, 12) der diesem zum Senden des Antwortsignales zugeordnete Sender (5, 16) geweckt wird.

10. Verfahren nach Anspruch 8 oder 9, **dadurch gekennzeichnet, daß** das Antwortsignal des Transponders (2) durch die diesem zugeordnete NF-Stufe (5) gesendet wird.

11. Verfahren nach Anspruch 8 oder 9, **dadurch gekennzeichnet, daß** das Antwortsignal des Transponders (12) durch eine dem Transponder (12) zugeordnete HF-Stufe (16) gesendet wird, während oder vor welcher Signalübermittlung durch die Basisstation (11) eine Belegungsüberprüfung hinsichtlich einer Fremdbelegung der verwendeten Strecken (NF und HF) erfolgt und bei der Feststellung einer Fremdbelegung zumindest eines der beiden Strecken eine Belegungsmeldung ausgegeben wird.

12. Verfahren nach Anspruch 11, **dadurch gekennzeichnet, daß** auf der HF-Strecke ein bidirektionaler Dialog zwischen der Basisstation und dem Transponder stattfindet.

13. Verfahren nach Anspruch 11 oder 12, **dadurch gekennzeichnet, daß** die NF-Stufe (3) der Basisstation (11) bei gestörtem Empfang eines HF-Antwortsignales des Transponders (12) ein Steuersignal sendet, welches den Transponder (12) in einen Toggelbetrieb schaltet.

14. Verfahren nach einem der Ansprüche 10 bis 12, **dadurch gekennzeichnet, daß** die HF-Antenne (16) des Transponders (12) verstimmt wird, wenn ein Empfangsbestätigungssignal nicht von der NF-Stufe (14) des Transponders (12) empfangen wird.

15. Verfahren nach einem der Ansprüche 8 bis 14, **dadurch gekennzeichnet, daß** als das von der Basisstation (11) gesendetes Kontrollsignal ein codiertes Wecksignal verwendet wird.

16. Verfahren nach einem oder mehreren der Ansprüche 8 bis 15, **dadurch gekennzeichnet, daß** das Verfahren mit einer Vielzahl von Transpondern (2, 12) durchgeführt wird, wobei zusätzlich eine Antikollisionsüberprüfung hinsichtlich der Empfangsbereitschaft der die Antwortsignale empfangenden Stufe (3, 15) der Basisstation (1, 11) durchgeführt wird.

17. Verfahren nach einem der Ansprüche 8 bis 16, **dadurch gekennzeichhet,** daß die Basisstation (1, 11) ein zyklisches Kontrollsignal auf der NF-Strecke sendet und das ein von einem Transponder (2, 12) gesendetes Alarmsignal von einem Alarmsignalempfänger (7) empfangen wird, der bezüglich des Sendens des Kontrollsignales antizyklisch synchronisiert ist, so daß ein Empfang eines Alarmsignales möglich ist, wenn die Basisstation (1, 11) kein Kontrollsignal sendet.

18. Verfahren nach Anspruch 17, **dadurch gekennzeichnet, daß** der Eingangskreis des Alarmsignalempfängers (7) für die Dauer des Kontrollsignales der Basisstation (1, 11) über Dämpfungsglieder stumm geschaltet wird.

19. Verfahren nach einem der Ansprüche 8 bis 18, **dadurch gekennzeichnet, daß** das von der Basisstation (1, 11) gesendete Weck- bzw. Kontrollsignal als Synchronisationssignal zum zeitlichen Synchronisieren des Aussendens eines von einem Transponder (2, 12) gesendeten Alarmsignales verwendet wird, und daß der Dateninhalt des gesendeten Alarmsignales der Transponder (2, 12) datengleich ist.

20. Verfahren nach einem der Ansprüche 11 bis 19, **dadurch gekennzeichnet, daß** ein in Alarmbetrieb versetzter Transponder (12) sein Alarmsignal durch wiederholtes Umschalten der Sendebetriebsarten abwechselnd auf der NF-Strecke und auf der HF-Strecke sendet.

## Claims

1. Anti-theft security system for securing merchandise and comprising a base station, which generates an electromagnetic field, radiated via an antenna, and one or more merchandise security tags cooperating with the base station and each generating an answer signal, such a security tag being attached to each article of merchandise, and the articles having to be guided through the electromagnetic field of the base station before leaving the area protected by the security system and the answer signal detectable by the base station being generated as a security tag is taken through said field, **characterised in that** the base station (1, 11) has a LF-stage (3, 13) which has a LF transmitting-and-receiving unit and operates on low frequency and **in that** the security tags cooperating with the base station (1, 11) each include an active transponder (2, 12) which has a LF-stage (5, 14) with a LF transmitting-and-receiving unit operating on the same frequency, such that bidirectional signal transmission can take place between the base station (1, 11) and a transponder (2, 12).

2. Anti-theft security system according to claim 1, **characterised in that** the LF transmitting-and-receiving unit (5, 14) of the transponder (2, 12) has a single antenna (6) which serves both for signal reception and for transmission.

3. Anti-theft security system according to claim 1 or 2, **characterised in that** with the transponder (12) is associated a HF-stage (16) operating on high frequency, capable of being prompted by its LF-transmitting-and-receiving unit (14) and comprising a HF-transmitter, and with the base station (1, 11) is associated a HF-stage (15) with a HF-receiver operating on the same frequency.

4. Anti-theft security system according to claim 3, **characterised in that** the HF-transmitter (16) of the transponder (12) is connected to an antenna detuning device (18).

5. Anti-theft security system according to claim 3 or 4, **characterised in that,** a HF transmitting-and-receiving unit is associated as the HF-stage with both the base station and the transponder.

6. Anti-theft security system according to one of claims 1 to 5, **characterised in that** the LF-receiver of the LF-stage (3, 13) is designed as an alarm receiver to receive an alarm signal transmitted from the transponder (2, 12).

7. Anti-theft security system according to one of claims 1 to 6, **characterised in that** there is associated with the base station (1, 11) a further alarm receiver (7), the receiving range (10) of which is arranged substantially outside the active range (9) of the base station (1).

8. Method for the automatic detection and identification of a merchandise security tag by a base station (1, 11) using two LF-stages (3, 13; 5, 14), one LF-stage (3, 13) which has a LF transmitting-and-receiving unit being associated with the base station (1, 11) and a further LF-stage (5,14) which has a LF transmitting-and-receiving unit being associated with an active transponder (2, 12), said method comprising the following steps:
- transmission of a low-frequency control signal by the LF-stage (3, 13) of the base station (1, 11),
- reception of the control signal by the LF-stage (5, 14) of the transponder (2, 12),
- transmission of an answer signal by a transmitter (5, 16) associated with the transponder (2, 12),
- reception of an answer signal by a receiving unit (3, 15) of the base station (1, 11) operating on the same frequency,
- transmission of a receipt confirmation signal by the base station (1, 11) and
- reception of the receipt confirmation signal by the transponder (2, 12),
- wherein, on receipt of a non-release signal by the transponder (12) or where no receipt confirmation signal is received after repeated transmission of the answer signal, the transponder (2, 12) triggers an alarm on the LF-line,
- wherein, before and/or during the signal transmission by the base station (1, 11), an occupancy check takes place in respect of external occupancy of the line used to receive the answer signal, and an occupancy message is issued if such occupancy is detected.

9. Method according to claim 8, **characterised in that** the control signal is a prompting signal, after the reception of which by the LF-receiver (5, 14) of the transponder (2, 12), the transmitter (5, 16) associated with said transponder is prompted to transmit the answer signal.

10. Method according to claim 8 or 9, **characterised in that** the answer signal of the transponder (2) is transmitted by the LF-stage (5) associated with said transponder.

11. Method according to claim 8 or 9, **characterised in that** the answer signal of the transponder (12) is transmitted by a HF-stage (16) associated with the transponder (12), and during or before this signal transmission by the base station (11) an occupancy check takes place in respect of external occupancy of the lines (LF and HF) used and an occupancy message is issued if external occupancy of at least one of the lines is detected.

12. Method according to claim 11, **characterised in that** a bidirectional dialogue takes place between the base station and the transponder.

13. Method according to claim 11 or 12, **characterised in that,** when there is interference in a HF answer signal of the transponder (12), the LF-stage (3) of the base station (11) transmits a control signal which switches the transponder (12) into toggle operation.

14. Method according to one of claims 10 to 12, **characterised in that** the HF-antenna (16) of the transponder (12) is detuned when no receipt confirmation signal is received from the LF-stage (14) of the transponder (12).

15. Method according to one of claims 8 to 14, **characterised in that** an encoded prompting signal is used as the control signal transmitted by the base station (11).

16. Method according to one or more of claims 8 to 15, **characterised in that** the method is accomplished with a large number of transponders (2, 12), an anti-collision check being additionally carried out in respect of the receiving readiness of the stage (3, 15) of the base station (1, 11) receiving the answer signals.

17. Method according to one of claims 8 to 16, **characterised in that** the base station (1, 11) transmits a cyclical control signal on the LF-line and that an alarm signal transmitted by a transponder (2, 12) is received by an alarm signal receiver (7), which is synchronised anti-cyclically with respect to the transmission of the control signal, such that reception of the alarm signal is possible when the base station (1, 11) is not transmitting a control signal.

18. Method according to claim 17, **characterised in that** the input circuit of the alarm signal receiver (7) is switched silent via attenuators for the duration of the control signal of the base station (1, 11).

19. Method according to one of claims 8 to 18, **characterised in that** the prompting or control signal transmitted by the base station (1, 11) is used as a synchronising signal for synchronising in time the transmission of an alarm signal transmitted by a transponder (2, 12), and **in that** the data content of the transmitted alarm signal of the transponders (2, 12) comprises the same data.

20. Method according to one of claims 11 to 19, **characterised in that** a transponder (12) put into alarm operation transmits its alarm signal by repeatedly reversing the transmission modes alternately on the LF-line and on the HF-line.

## Revendications

1. Système antivol pour protéger les articles comprenant une station de base qui génère un champ électromagnétique diffusé à partir d'une antenne et une ou plusieurs étiquettes de surveillance d'articles produisant chacune, en agissant conjointement avec la station de base, un signal de réponse, sachant qu'une telle étiquette de surveillance est apposée sur chaque article et qu'avant de quitter le lieu placé sous surveillance, les articles doivent traverser le champ électromagnétique de la station de base et qu'au passage de l'étiquette de surveillance se produit un signal de réponse enregistrable par la station de base **caractérisé en ce que** la station de base (1, 11) présente un étage BF (3, 13) fonctionnant à basses fréquences, avec une unité d'émission et de réception et que les étiquettes de surveillance, agissant conjointement avec la station de base (1, 11), comprennent chacune un transpondeur actif (2, 12) avec un étage BF (5, 14) fonctionnant sur la même fréquence avec une unité d'émission et de réception BF, de manière à permettre une transmission bidirectionnelle des signaux entre la station de base (1, 11) et un transpondeur (2,12).

2. Système antivol selon la revendication 1, **caractérisé en ce que** l'unité d'émission et de réception BF (5, 14) du transpondeur (2, 12) ne présenté qu'une seule antenne (6) qui sert indifféremment à la réception et à l'émission d'un signal.

3. Système antivol selon la revendication 1 ou 2, caractérisé en que le transpondeur (12) comporte un étage HF (16), avec émetteur HF, fonctionnant à hautes fréquences, qui puisse être réveillé par une unité d'émission et de réception BF (14), et en ce que la station de base (1, 11) comporte un étage HF (15) avec un récepteur HF, fonctionnant à la même fréquence.

4. Système antivol selon la revendication 3, **caractérisé en ce que** l'émetteur HF (16) du transpondeur (12) soit raccordé à un désaccordeur d'antenne (18).

5. Système antivol selon la revendication 3 ou 4, **caractérisé en ce que** la station de base tout comme le transpondeur comportent en guise d'étage HF, une unité d'émission et de réception HF.

6. Système antivol selon l'une des revendications 1 à 5, **caractérisé en ce que** le récepteur BF de l'étage BF (3, 13) soit conçu comme un récepteur d'alarme pour réceptionner un signal d'alarme émis par le transpondeur (2, 12).

7. Système antivol selon l'une des revendications 1 à 6, **caractérisé en ce que** l'on affecte à la station de base (1, 11) un autre récepteur d'alarme (7), dont le champ de réception (10) soit essentiellement en dehors du champ d'action (9) de la station de base (1).

8. Procédé pour détecter et identifier automatiquement une étiquette de surveillance d'articles par une station de base (1, 11) en utilisant deux étages BF (3, 13 ; 5, 14), sachant qu'un étage BF (3, 13), avec une unité d'émission et de réception BF, est affecté à la station de base (1, 11) et qu'un autre étage BF (5, 14), avec une unité d'émission et de réception BF, est affecté à un transpondeur actif (2, 12), selon les étapes suivantes :
- émission d'un signal de contrôle basse fréquence par l'étage BF (3, 13) de la station de base (1, 11),
- réception du signal de contrôle par l'étage BF (5, 14) du transpondeur (2, 12)
- émission d'un signal de réponse par un émetteur (5, 16) affecté au transpondeur (2, 12),
- réception du signal de réponse par l'unité de réception (3, 15) de la station de base (1, 11) qui fonctionne sur la même fréquence
- émission d'un signal de confirmation de réception par la station de base (1, 11) et
- réception du signal de confirmation de réception par le transpondeur (2, 12),
- sachant qu'en cas de réception d'un signal de non-validation par le transpondeur (12) ou en cas de non-réception de signal de confirmation de réception après répétition de l'émission d'un signal de réponse, le transpondeur (2, 12) déclenche, sur la voie de transmission BF, une alarme et
- sachant qu'avant et/ou pendant la transmission du signal par la station de base (1, 11) un contrôle d'occupation s'effectue pour constater une occupation par une source extérieure de la voie de transmission utilisée pour la réception du signal de réponse et, qu'en cas de constatation d'une occupation par une source extérieure, un signal d'occupation sera émis.

9. Procédé selon la revendication 8, **caractérisé en ce que** le signal de contrôle soit un signal de réveil qui, après sa réception par le récepteur BF (5, 14) du transpondeur (2, 12) réveille l'émetteur (5, 16) affecté à ce dernier et prévu pour émettre le signal de réponse.

10. Procédé selon la revendication 8 ou 9, **caractérisé en ce que** le signal de réponse du trahspondeur (2) soit émis par l'étage BF (5) qui lui est affecté.

11. Procédé selon la revendication 8 ou 9, **caractérisé en ce que** le signal de réponse du transpondeur (12) soit émis par un étage HF (16) affecté au transpondeur (12) et qu'avant ou pendant la transmission du signal par la station de base (11) s'effectue un contrôle d'occupation pour vérifier l'occupation par une source extérieure des voies de transmission (BF et HF) utilisées et qu'en cas de constatation de l'occupation par une source extérieure, au moins l'une des deux voies de transmission émette un signal d'occupation.

12. Procédé selon la revendication 11, caractérisé en qu'un dialogue bidirectionnel s'établisse sur la voie de transmission HF entre la station de base et le transpondeur.

13. Procédé selon la revendication 11 ou 12, **caractérisé en ce que** l'étage BF (3) de la station de base (11) émette, en cas de dérangement dans la réception du signal de réponse HF du transpondeur (12), un signal de commande qui place le transpondeur (12) dans un cycle de basculement.

14. Procédé selon l'une des revendications 10 à 12, **caractérisé en ce que** l'antenne HF (16) du transpondeur (12) soit désaccordée lorsque l'étage NF (14) du transpondeur (12) ne réceptionne pas le signal de confirmation de réception.

15. Procédé selon l'une des revendications 8 à 14, **caractérisé en ce que** le signal de contrôle émis par la station de base (11) soit un signal de réveil codé.

16. Procédé selon une ou plusieurs des revendications 8 à 14, **caractérisé en ce que** le procédé soit mis en oeuvre avec une multitude de transpondeurs (2, 12) en procédant de surcroît à un contrôle anti-collision en ce qui concerne la capacité de réception de l'étage (3, 15), affecté à la réception des signaux de réponse, de la station de base (1, 11).

17. Procédé selon l'une des revendications 8 à 16, **caractérisé en ce que** la station de base (1, 11) émette un signal de contrôle cyclique sur la voie de transmission BF, et qu'un signal d'alarme émis par le transpondeur (2, 12) soit réceptionné par un récepteur de signal d'alarme (7) qui, par rapport à l'émission du signal de contrôle, est synchronisé de manière anticyclique, de manière à permettre la réception d'un signal d'alarme lorsque la station de base (1, 11) n'émet aucun signal de contrôle.

18. Procédé selon la revendication 17, **caractérisé en ce que** le circuit d'entrée du récepteur de signal d'alarme (7) soit commuté en mode muet par des éléments amortisseurs, tant que le signal de contrôle de la station de base (1, 11) est émis.

19. Procédé selon l'une des revendications 8 à 18, **caractérisé en ce que** le signal de réveil ou de contrôle émis par la station de base (1, 11) soit utilisé comme un signal de synchronisation pour l'émission synchronisée d'un signal d'alarme émis par les transpondeurs (2, 12) et que le contenu des données du signal d'alarme émis par les transpondeurs (2, 12) soit identique.

20. Procédé selon l'une des revendications 11 à 19, **caractérisé en ce qu'**un transpondeur (12) placé en mode alarme émette son signal d'alarme en commutant de manière répétée entre les différents modes d'émission et en émettant alternativement sur la voie de transmission BF et sur la voie de transmission HF.
